# EUROPÄISCHE PATENTSCHRIFT

(11) **EP 4 463 283 B1**
(45) Veröffentlichungstag und Bekanntmachung des Hinweises auf die Patenterteilung: **07.10.2026**
(21) Anmeldenummer: 23700473.4
(22) Anmeldetag: 09.01.2023
(51) Int. Cl.: B23K 20/10, B29C 65/08, B06B 3/00, B29C 65/00

(54) **SONOTRODE MIT OPTIMIERTER SCHLITZ-GEOMETRIE**
SONOTRODE HAVING OPTIMIZED SLOT GEOMETRY
SONOTRODE À GÉOMÉTRIE DE FENTE OPTIMISÉE

(30) Priorität: 11.01.2022 DE 102022100500
(43) Veröffentlichungstag der Anmeldung: 20.11.2024
(73) Patentinhaber: Herrmann Ultraschalltechnik GmbH & Co. KG, 76307 Karlsbad (DE)
(72) Erfinder: SCHWEITZER, Matthias, 75210 Keltern (DE)
(74) Vertreter: WSL Patentanwälte Partnerschaft mbB
(86) Internationale Anmeldenummer: PCT/EP2023/050262
(87) Internationale Veröffentlichungsnummer: WO 2023/135068

(56) Entgegenhaltungen:
- EP-B1- 2 774 746
- US-A1- 2005 028 942
- US-B2- 6 947 697

## Beschreibung

Die vorliegende Erfindung betrifft ein Ultraschallschwingelement, welches mit einer longitudinalen Ultraschallschwingung in einer Längsrichtung in eine Resonanzschwingung versetzt werden kann, wobei die Ultraschallschwingeinheit in Längsrichtung einerseits von einer rückseitigen Fläche und andererseits von einer Stirnfläche begrenzt wird, wobei die Stirnfläche entweder dafür vorgesehen ist, mit einem weiteren Ultraschallschwingelement in Kontakt zu treten, um die Ultraschallschwingung auf das weitere Ultraschallschwingelement zu übertragen, oder als Siegelfläche ausgebildet ist oder an eine Siegelfläche grenzt, die dafür vorgesehen ist, mit einem zu bearbeitenden Material in Kontakt zu treten und die Ultraschallschwingung auf das zu bearbeitende Material zu übertragen.

Das Ultraschallschwingelement weist in der Regel eine umlaufende Mantelfläche auf, welche die rückseitige Fläche und die Stirnfläche miteinander verbindet. Ein solches Ultraschallschwingelement, das als Sonotrode ausgebildet ist, ist aus der EP 2 774 746 B1 bekannt. Bei diesem Ultraschallschwingelement ist die Stirnfläche als Siegelfläche ausgebildet. Das Ultraschallschwingelement könnte auch als Amplitudentransformator oder als Konverter ausgebildet sein.

In der Regel stellt die Sonotrode einen Halbwellenresonator dar, d.h. die gesamte Länge der Sonotrode entlang der Längsrichtung entspricht einer halben Wellenlänge der Resonanzschwingung der Sonotrode.

Dieses Ultraschallschwingelement weist in der Mantelfläche eine Reihe von Schlitzen auf, wobei die Schlitze in einer Schlitzlängsrichtung eine Schlitzlänge I, in einer Schlitzquerrichtung eine Schlitzbreite b sowie in einer Schlitztiefenrichtung eine Schlitztiefe t aufweisen, wobei die Schlitzlängsrichtung, die Schlitzquerrichtung und die Schlitztiefenrichtung orthogonal zueinander angeordnet sind und die Schlitztiefe t so gewählt ist, dass der Schlitz das Ultraschallelement vollständig durchdringt, und die Schlitzlänge I größer als die Schlitzbreite b ist.

Die Schlitze sind unter anderem dazu da, innerhalb des Materials auftretende Spannungen aufgrund der Anregung mit einer longitudinalen Ultraschallschwingung, zu reduzieren, wodurch es möglich ist, die Sonotrode mit einer höheren Schwingungsamplitude anzuregen. Mit der Dimensionierung und Positionierung der Schlitze können zudem die Schwingungsamplitude sowie die Lage von unerwünschten Schwingungsmoden beeinflusst werden.

Bei der Dimensionierung der Schlitze werden häufig auch maximal zulässige mechanische Spannungswerte innerhalb des Materials berücksichtigt. Allerdings führt das Einbringen von Schlitzen in der Regel zu weiteren, nicht gewünschten Schwingungsmoden, deren Anregungsfrequenzen möglichst weit von der Anregungsfrequenz der für den Betrieb vorgesehenen Hauptfrequenz entfernt liegen sollte.

In der beschriebenen Veröffentlichung werden die Nachteile, die mit einer Anordnung der Schlitze parallel zur Längsrichtung verbunden sind, im Detail beschrieben. In der EP 2 774 746 B1 wurden daher die Schlitze gegenüber zur Längsachse der Sonotrode geneigt angeordnet.

In der US 2005/028942 A1 wird eine weitere Möglichkeit für die Ausgestaltung von Schlitzen in einer Sonotrode beschrieben.

Ausgehend von dem beschriebenen Stand der Technik ist es daher Aufgabe der vorliegenden Erfindung, eine alternative Schlitzgeometrie und Anordnung bereitzustellen, die die Anforderungen an die maximale zulässigen mechanischen Spannungswerten erfüllt, eine hohe Schwingungsamplitude aufweist und keine zur Längsachse der Sonotrode geneigten Schlitze erfordert.

Diese Aufgabe wird dadurch gelöst, dass der Schlitz in einer Schnittansicht nicht achsensymmetrisch zu einer Schlitzlängsachse entlang der Schlitzlängsrichtung ist, der Schlitz von zwei Längswänden und zwei Querwänden begrenzt wird, wobei eine erste der zwei Längswände zumindest abschnittsweise weiter von der Schlitzlängsachse entfernt ist als eine zweite der zwei Längswände, indem in der ersten Längswand eine Ausnehmung eingebracht ist.

Im Gegensatz zu den bekannten Schlitzen, wird der Schlitz erfindungsgemäß asymmetrisch in Bezug auf die Schlitzlängsrichtung ausgebildet.

Es ist dann nicht notwendig, den Schlitz wie im Stand der Technik schräg anzuordnen. Stattdessen kann die Schlitzlängsrichtung und die Längsrichtung einen Winkel einschließen, der kleiner als 25°, vorzugsweise kleiner als 5° und am besten 0° beträgt.

Das gewünschte schwingungstechnische Ergebnis wird daher durch die nicht achsensymmetrische Ausbildung des Schlitzes erreicht.

In einer bevorzugten Ausführungsform sind zwei Schlitze vorgesehen, wobei die beiden Schlitze achsensymmetrisch zu einer Achse entlang der Längsrichtung angeordnet sind.

In einer besonders bevorzugten Ausführungsform sind vier Schlitze vorgesehen, wobei jeweils zwei der vier Schlitze achsensymmetrisch zu einer Achse entlang der Längsrichtung angeordnet sind.

Das Vorsehen von mehr als einem Schlitz verbessert die mechanischen Spannungen im Ultraschallschwingelement. Auch wird die Lage von unerwünschten Nebenresonanzen verbessert.

In einer bevorzugten Ausführungsform weist das Ultraschallschwingelement einen ersten, zweiten und dritten Abschnitt auf, wobei der erste Abschnitt eine Dicke aufweist, die kleiner als die Dicke des dritten Abschnittes ist, wobei der zweite Abschnitt eine variierende Dicke aufweist und den ersten mit dem dritten Abschnitt verbindet. Dabei sind die drei Abschnitte in Längsrichtung hintereinander angeordnet.

Durch die unterschiedlichen Dicken kann die Amplitude der Ultraschallschwingung angepasst bzw. vergrößert werden. Daher ist vorzugsweise der erste Abschnitt so angeordnet, dass er die Stirnfläche umfasst, während der dritte Abschnitt die rückseitige Fläche umfasst.

In einer bevorzugten Ausführungsform weist der erste Abschnitt eine Siegelfläche auf, die dafür vorgesehen ist, mit einem zu bearbeitenden Material in Kontakt zu treten.

Dadurch ist sichergestellt, dass bei der Anregung des Ultraschallschwingelementes die Siegelfläche eine vergleichsweise große Schwingungsamplitude der Ultraschallschwingung aufweist.

In einer weiteren bevorzugten Ausführungsform weist der dritte Abschnitt eine Ausnehmung auf, in welcher mindestens ein Piezoelement angeordnet ist. Das Ultraschallschwingelement ist daher sehr kompakt ausgeführt, wobei innerhalb des Ultraschallschwingelementes mithilfe der Piezoelemente die Schwingung erzeugt und durch das Ultraschallschwingelement auf das zu bearbeitende Material übertragen werden kann. Dieses Ultraschallschwingelement integriert somit Sonotrode, Amplitudentransformator und Konverter in ein einziges Element.

Erfindungsgemäß ist vorgesehen, dass der Schlitz von zwei Längswänden und zwei Querwänden begrenzt wird, wobei eine erste der zwei Längswände zumindest abschnittsweise weiter von der Schlitzlängsachse entfernt ist als eine zweite der zwei Längsachsen. Im Grunde genommen kann solch ein Schlitz dadurch hergestellt werden, dass zunächst ein Schlitz mit zwei parallelen Längswänden hergestellt wird und dann in die erste Längswand eine Ausnehmung eingebracht wird.

Vorzugsweise ist die erste Längswand weiter von einer in Längsrichtung verlaufenden Mittelachse des Ultraschallschwingelementes entfernt angeordnet als die zweite Längswand.

Hierdurch konnten die mechanischen Spannungen innerhalb des Ultraschallschwingelementes weiter reduziert werden. In einer weiteren bevorzugten Ausführungsform sind die beiden Querwände konkav gekrümmt, wobei vorzugsweise die beiden Querwänden mit dem gleichen Krümmungsradius gekrümmt ausgebildet sind.

Weiterhin ist es von Vorteil, wenn die erste Längswand zumindest abschnittsweise konkav gekrümmt ausgebildet ist.

Weitere Vorteile, Merkmale und Anwendungsmöglichkeiten werden deutlich anhand der folgenden Beschreibung einer bevorzugten Ausführungsform und der zugehörigen Figuren.

Es zeigen:
- Figur 1: eine perspektivische Ansicht auf ein Ultraschallschwingelement der Erfindung und

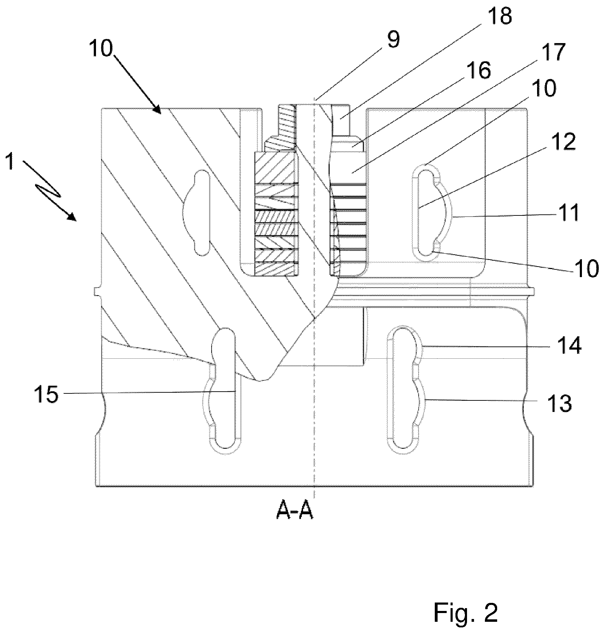

- Figur 2: eine teilgeschnittene Draufsicht auf das Ultraschallschwingelement von Figur 1.

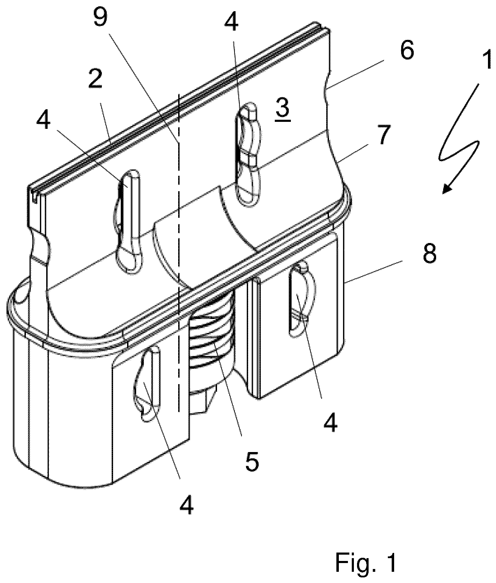

In Figur 1 ist eine perspektivische Ansicht einer erfindungsgemäßen Ausführungsform eines Ultraschallschwingelementes 1 gezeigt. Zu erkennen ist eine als Siegelfläche 2 ausgebildete Stirnseite, die dafür vorgesehen ist, mit einem zu bearbeitenden Material in Kontakt zu treten. Gegenüberliegend der Stirnseite 2 ist die rückseitige Fläche (in der Figur nicht zu erkennen) angeordnet. Die Stirnseite 2 und die rückseitige Fläche sind über eine umlaufende Mantelfläche 3 miteinander verbunden.

Das Ultraschallschwingelement 1 weist in Richtung seiner Längsachse 9 drei Abschnitte auf, nämlich einen ersten Abschnitt 6, dessen Dicke im Wesentlichen der Breite der Siegelfläche 2 entspricht, einen dritten Abschnitt 8, der deutlich dicker ausgebildet ist als der erste Abschnitt 6 und einen zweiten Abschnitt 7, dessen Dicke variiert und der zwischen dem ersten Abschnitt 6 und dem dritten Abschnitt 8 angeordnet ist.

Das Ultraschallschwingelement weist in dieser Ausführungsform im dritten Abschnitt 8 eine Ausnehmung auf, in welcher eine Mehrzahl von Piezoelementen 5 angeordnet sind, mit denen das Ultraschallschwingelement 1 in eine Ultraschallschwingung versetzt werden kann. Die Piezoelemente 5 weisen eine Durchgangsöffnung auf, durch welche in dieser Ausführungsform eine Schraube 18 greift. Ein Oberteil 17 wird mit Hilfe einer Mutter 16 gegen die Piezoelemente 5 gedrückt, so dass die Piezoelemente 5 zwischen Oberteil 17 und Ultraschallschwingelement 1 gehalten werden.

Damit die mechanischen Spannungen innerhalb des Materials nicht zu groß werden und die Position von unerwünschten Nebenresonanzen zu optimieren, sind vier Schlitze 4 vorgesehen, die das Material in einer Tiefenrichtung vollständig durchdringen.

Erfindungsgemäß weisen die Schlitze eine besondere Form auf. Die Schlitze weisen zwei Querwände 10 sowie eine erste Längswand 11 und eine zweite Längswand 12 auf.

Die Schlitze erstrecken sich entlang einer Schlitzlängsrichtung 15, die im gezeigten Beispiel mit der Längsrichtung 9 des Ultraschallschwingelementes einen Winkel von 0° einschließt, d. h. parallel zu dieser verläuft.

Die beiden Querwände 10 der Schlitze sind gekrümmt. Die zweite Längswand des Schlitzes 12 ist ebenfalls parallel zur Längsachse 9 ausgeführt. Die Längswand 11 des Schlitzes 4 ist konkav gekrümmt ausgeführt.

Im Grunde genommen könnte die erfindungsgemäßen Schlitze so hergestellt werden, dass zunächst ein Schlitz mit zwei parallelen Längswänden hergestellt wird und dann in die erste Wand 11 eine entsprechende Kerbe eingebracht wird. Es können auch mehrere Kerben 13, 14 in einen der Schlitze eingebracht werden, wie bei den beiden Schlitzen 4, die näher an der rückseitigen Fläche angeordnet sind, zu erkennen ist.

### Bezugszeichen

- 1: Ultraschallschwingelement
- 2: Siegelfläche, Stirnseite
- 3: Mantelfläche
- 4: Schlitz
- 5: Piezoelement
- 6: erster Abschnitt
- 7: zweiter Abschnitt
- 8: dritter Abschnitt
- 9: Längsachse, Längsrichtung
- 10: Querwand
- 11: erste Längswand
- 12: zweite Längswand
- 13, 14: Kerbe
- 15: Schlitzlängsrichtung
- 16: Mutter
- 17: Oberteil
- 18: Schraube

## Patentansprüche

1. Ultraschallschwingelement (1), welches mit einer longitudinalen Ultraschallschwingung in einer Längsrichtung (9) in eine Resonanzschwingung versetzt werden kann, wobei die Ultraschallschwingeinheit in Längsrichtung (9) einerseits von einer rückseitigen Fläche und andererseits von einer Stirnfläche begrenzt wird, wobei die Stirnfläche entweder dafür vorgesehen ist, mit einem weiteren Ultraschallschwingelement (1) in Kontakt zu treten, um die Ultraschallschwingung auf das weitere Ultraschallschwingelement (1) zu übertragen, oder als Siegelfläche (2) ausgebildet ist oder an eine Siegelfläche (2) grenzt, die dafür vorgesehen ist, mit einem zu bearbeitenden Material in Kontakt zu treten und die Ultraschallschwingung auf das zu bearbeitende Material zu übertragen, wobei eine umlaufene Mantelfläche (3) vorgesehen ist, welche die rückseitige Fläche und die Stirnfläche miteinander verbindet, wobei das Ultraschallschwingelement (1) in der Mantelfläche (3) einen Schlitz (4) aufweist, wobei der Schlitz (4) in einer Schlitzlängsrichtung (15) eine Schlitzlänge I, in einer Schlitzquerrichtung eine Schlitzbreite b sowie in einer Schlitztiefenrichtung eine Schlitztiefe t aufweist, wobei die Schlitzlängsrichtung (15), die Schlitzquerrichtung und die Schlitztiefenrichtung orthogonal zueinander angeordnet sind, wobei die Schlitztiefe t so gewählt ist, dass der Schlitz (4) das Ultraschallelement vollständig durchdringt, und die Schlitzlänge I größer als die Schlitzbreite b, wobei der Schlitz (4) in einer Schnittansicht nicht achsensymmetrisch zu einer Schlitzlängsachse entlang der Schlitzlängsrichtung (15) ist, wobei der Schlitz (4) von zwei Längswänden (11, 12) und zwei Querwänden (10) begrenzt wird, **dadurch gekennzeichnet, dass** eine erste der zwei Längswände (11, 12) zumindest abschnittsweise weiter von der Schlitzlängsachse entfernt ist als eine zweite der zwei Längswände (11, 12), indem in der ersten Längswand (11) eine Ausnehmung eingebracht ist.

2. Ultraschallschwingelement (1) nach Anspruch 1, **dadurch gekennzeichnet, dass** die Schlitzlängsrichtung (15) und die Längsrichtung (9) einen Winkel einschließen, der kleiner als 25°, vorzugsweise kleiner als 5° und am besten 0° beträgt.

3. Ultraschallschwingelement (1) nach Anspruch 1 oder 2, **dadurch gekennzeichnet, dass** zwei Schlitze (4) vorgesehen sind, wobei die beiden Schlitze (4) achsensymmetrisch zu einer Achse entlang der Längsrichtung (9) angeordnet sind.

4. Ultraschallschwingelement (1) nach Anspruch 3, **dadurch gekennzeichnet, dass** vier Schlitze (4) vorgesehen sind, wobei jeweils zwei der vier Schlitze (4) achsensymmetrisch zu einer Achse entlang der Längsrichtung (9) angeordnet sind.

5. Ultraschallschwingelement (1) nach Anspruch 3 oder 4, **dadurch gekennzeichnet, dass** das Ultraschallschwingelement (1) einen ersten, zweiten und dritten Abschnitt (6, 7, 8) aufweist, wobei der erste Abschnitt (6) eine Dicke aufweist, die kleiner als die Dicke des dritten Abschnitts (8) ist, wobei der zweite Abschnitt (7) eine variierende Dicke aufweist und den ersten (6) mit dem dritten Abschnitt (8) verbindet.

6. Ultraschallschwingelement (1) nach Anspruch 5, **dadurch gekennzeichnet, dass** der erste Abschnitt (6) eine Siegelfläche (2) aufweist, die dafür vorgesehen ist, mit einem zu bearbeitenden Material in Kontakt zu treten.

7. Ultraschallschwingelement (1) nach Anspruch 5 oder 6, **dadurch gekennzeichnet, dass** der dritte Abschnitt (8) eine Ausnehmung aufweist, in welcher mindestens ein Piezoelement (5) angeordnet ist.

8. Ultraschallschwingelement (1) nach einem der Ansprüche 1-7, **dadurch gekennzeichnet, dass** die erste Längswand (11) weiter von einer in Längsrichtung (9) verlaufende Mittelachse des Ultraschallschwingelements (1) entfernt angeordnet ist als die zweite Längswand (12).

9. Ultraschallschwingelement (1) nach Anspruch 8, **dadurch gekennzeichnet, dass** die beiden Querwände (10) konkav gekrümmt ausgebildet sind, wobei vorzugweise die beiden Querwände (10) mit dem gleichen Krümmungsradius gekrümmt ausgebildet sind.

10. Ultraschallschwingelement (1) nach 8 oder 9, **dadurch gekennzeichnet, dass** die erste Längswand (11) zumindest abschnittsweise konkav gekrümmt ausgebildet ist.

## Claims

1. Ultrasonic vibration element (1) which can be set into resonant vibration with a longitudinal ultrasonic vibration in a longitudinal direction (9), wherein the ultrasonic vibration unit is bounded in the longitudinal direction (9) on the one hand by a rear face and on the other hand by a front face, wherein the front face is either intended to come into contact with a further ultrasonic vibration element (1) in order to transmit the ultrasonic vibration to the further ultrasonic vibration element (1), or is designed as a sealing surface (2) or adjoins a sealing surface (2) which is intended to come into contact with a material to be processed and to transmit the ultrasonic vibration to the material to be processed, wherein a circumferential lateral surface (3) is provided, which connects the rear face and the front face to one another, wherein the ultrasonic vibration element (1) has a slit (4) in the lateral surface (3), wherein the slit (4) has a slit length I in a slit longitudinal direction (15), a slit width b in a slit transverse direction and a slit depth t in a slit depth direction, the slit longitudinal direction (15), the slit transverse direction and the slit depth direction being arranged orthogonally to one another, the slit depth t being selected such that the slit (4) completely penetrates the ultrasonic element, and the slit length l being greater than the slit width b, wherein the slit (4) is not axially symmetrical to a slit longitudinal axis along the slit longitudinal direction (15) in a sectional view, wherein the slit (4) is bounded by two longitudinal walls (11, 12), **characterized in that** a first of the two longitudinal walls (11, 12) is at least in sections further away from the slit longitudinal axis than a second of the two longitudinal walls (11, 12), wherein a recess is arranged in the first longitudinal wall (11).

2. Ultrasonic vibration element (1) according to claim 1, **characterized in that** the slit longitudinal direction (15) and the longitudinal direction (9) enclose an angle which is less than 25°, preferably less than 5° and preferably 0°.

3. Ultrasonic vibration element (1) according to claim 1 or 2, **characterized in that** two slits (4) are provided, the two slits (4) being arranged axially symmetrically to an axis along the longitudinal direction (9).

4. Ultrasonic vibration element (1) according to claim 3, **characterized in that** four slits (4) are provided, two of the four slits (4) being arranged axially symmetrically to an axis along the longitudinal direction (9).

5. Ultrasonic vibration element (1) according to claim 3 or 4, **characterized in that** the ultrasonic vibration element (1) has a first, second and third section (6, 7, 8), the first section (6) having a thickness which is smaller than the thickness of the third section (8), wherein the second section (7) has a varying thickness and connects the first (6) to the third section (8).

6. Ultrasonic vibration element (1) according to claim 5, **characterized in that** the first section (6) has a sealing surface (2) which is intended to come into contact with a material to be processed.

7. Ultrasonic vibration element (1) according to claim 5 or 6, **characterized in that** the third section (8) has a recess in which at least one piezo element (5) is arranged.

8. Ultrasonic vibration element (1) according to one of claims 1-7, **characterized in that** the first longitudinal wall (11) is arranged further away from a center axis of the ultrasonic vibration element (1) extending in the longitudinal direction (9) than the second longitudinal wall (12).

9. Ultrasonic vibration element (1) according to claim 8, **characterized in that** the two cross walls (10) are concavely curved, the two cross walls (10) preferably being curved with the same radius of curvature.

10. Ultrasonic vibration element (1) according to claim 8 or 9, **characterized in that** the first longitudinal wall (11) is concavely curved at least in sections.

## Revendications

1. Elément oscillateur à ultrasons (1) qui peut être mis en une oscillation de résonance dans une direction longitudinale (9) moyennant une oscillation ultrasonique longitudinale, l'unité à oscillations ultrasoniques étant délimitée dans la direction longitudinale (9) d'une part par une surface de face arrière et d'autre part par une surface frontale, la face frontale étant soit prévue pour entrer en contact avec un autre élément oscillateur à ultrasons (1) pour transférer l'oscillation ultrasonique sur l'autre élément oscillateur à ultrasons (1), soit configurée comme surface de scellement (2) ou étant adjacente à une surface de scellement (2), qui est prévue pour entrer en contact avec un matériau à travailler et pour transférer l'oscillation ultrasonique au matériau à travailler, une surface enveloppe périphérique (3) étant prévue qui relie la surface de face arrière et la surface frontale l'une à l'autre, l'élément oscillateur à ultrasons (1) comprenant dans la surface enveloppe (3) une fente (4), la fente (4) ayant une longueur de fente 1 dans une direction de longueur de fente (15), une largeur de fente b dans une direction transversale de fente ainsi qu'une profondeur de fente t dans une direction de profondeur de fente, la direction de longueur de fente (15), la direction transversale de fente et la direction de profondeur de fente étant disposées perpendiculairement les unes par rapport aux autres, la direction de profondeur de fente t étant choisie de façon que la fente (4) traverse entièrement l'élément oscillateur à ultrasons, et la longueur de fente 1 étant supérieure à la largeur de fente b, la fente (4), vue en coupe, n'étant pas axisymétrique par rapport à un axe de longueur de fente le long de la direction de longueur de fente (15), la fente (4) étant délimitée par deux parois longitudinales (11, 12) et deux parois transversales (10),
**caractérisé en ce qu'**une première des deux parois longitudinales (11, 12) est, au moins par tronçons, plus éloignée de l'axe longitudinal de fente qu'une deuxième des deux parois longitudinales (11, 12) du fait qu'un évidement est formé dans la première paroi (11).

2. Elément oscillateur à ultrasons (1) selon la revendication 1, **caractérisé en ce que** la direction de longueur de fente (15) et la direction longitudinale (9) forment un angle plus petit que 25°, de préférence plus petit que 5°, au mieux 0°.

3. Elément oscillateur à ultrasons (1) selon la revendication 1 ou 2, **caractérisé en ce que** deux fentes (4) sont prévues, les deux fentes (4) étant disposées axisymétriquement par rapport à un axe le long de la direction longitudinale (9).

4. Elément oscillateur à ultrasons (1) selon la revendication 3, **caractérisé en ce que** quatre fentes (4) sont prévues, les quatre fentes étant disposées deux à deux axisymétriquement par rapport à un axe le long de la direction longitudinale (9).

5. Elément oscillateur à ultrasons (1) selon la revendication 3 ou 4, **caractérisé en ce que** l'élément oscillateur à ultrasons (1) comprend un premier, un deuxième, un troisième segment (6, 7, 8), le premier segment (6) ayant une épaisseur qui est inférieure à l'épaisseur du troisième segment (8), le deuxième segment (7) ayant une épaisseur variable et reliant le premier segment (6) au troisième (8).

6. Elément oscillateur à ultrasons (1) selon la revendication 5, **caractérisé en ce que** le premier segment (6) comprend une surface de scellement (2) qui est conçue pour entrer en contact avec un matériau à travailler.

7. Elément oscillateur à ultrasons (1) selon la revendication 5 ou 6, **caractérisé en ce que** le troisième segment (8) comprend un évidement dans lequel est disposé au moins un élément piézoélectrique (5).

8. Elément oscillateur à ultrasons (1) selon l'une des revendications 1 à 7, **caractérisé en ce que** la première paroi longitudinale (11) est disposée plus loin d'un axe médian de l'élément oscillateur à ultrasons (1) passant en direction longitudinale (9), que la deuxième paroi longitudinale (12).

9. Elément oscillateur à ultrasons (1) selon la revendication 8, **caractérisé en ce que** les deux parois transversales (10) sont réalisées avec une courbure concave, les deux parois transversales (10) étant réalisées de préférence avec une courbure de même rayon de courbure.

10. Elément oscillateur à ultrasons (1) selon la revendication 8 ou 9, **caractérisé en ce que** la première paroi longitudinale (11) est réalisée, au moins par tronçons, avec une courbure concave.
